# FASCICULE DE BREVET EUROPEEN

(11) **EP 2 473 535 B1**
(45) Date de publication et mention de la délivrance du brevet: **18.04.2018**
(21) Numéro de dépôt: 10763809.0
(22) Date de dépôt: 03.09.2010
(51) Int. Cl.: C08B 15/04

(54) **PROCEDE DE LAVAGE D'UN MATERIAU A BASE DE POLYSACCHARIDE AYANT SUBI UNE OXYDATION**
WASCHVERFAHREN FÜR EIN MATERIAL AUF DER BASIS EINES OXIDIERTEN POLYSACCHARIDS
METHOD FOR WASHING A MATERIAL BASED ON POLYSACCHARIDE THAT HAS UNDERGONE OXIDATION

(30) Priorité: 03.09.2009 FR 0956005
(43) Date de publication de la demande: 11.07.2012
(73) Titulaire: Sofradim Production, 01600 Trévoux (FR); Centre National de la Recherche Scientifique (C.N.R.S.), 75794 Paris Cedex 16 (FR); Institut National Polytechnique De Toulouse (INPT), 31400 Toulouse (FR)
(72) Inventeur: MONTANARI, Suzelei, F-01600 Trevoux (FR); CONDORET, Jean Stéphane, F-31400 Toulouse (FR); CAMY, Séverine, F-31400 Toulouse (FR); RENAULT, Benjamin, 69300 Caluire et Cuire (FR)
(74) Mandataire: Verriest, Philippe
(86) Numéro de dépôt international: PCT/FR2010/051839
(87) Numéro de publication internationale: WO 2011/027084

(56) Documents cités:
- FR-A1- 2 873 700
- US-A- 3 364 200
- US-A1- 2007 032 805
- US-A1- 2007 213 522

## Description

La présente invention concerne un procédé de lavage d'un matériau à base de polysaccharide ayant subi une oxydation par au moins un agent oxydant.

L'oxydation d'un polysaccharide par le dioxyde d'azote (NO₂/N₂O₄), et plus particulièrement de la cellulose, consiste à transformer un groupe hydroxyle primaire d'une unité anhydroglucose en un groupe carboxyle. Le dioxyde d'azote (NO₂) qui coexiste avec sa forme dimèrique N₂O₄ est un agent oxydant qui permet, suivant le procédé choisi, d'obtenir un degré d'oxydation contrôlé, voire une oxydation complète dudit polysaccharide. Un exemple de procédé d'oxydation de polysaccharide à l'aide de dioxyde d'azote et/ou de son dimère N₂O₄ et utilisant un fluide densifié inerte est décrit dans la demande de brevet WO 2006/018552. Il est entendu que d'autres agents oxydants peuvent être utilisés pour obtenir la même réaction d'oxydation d'un polysaccharide.

Il est entendu au sens de la présente invention que le terme cellulose est utilisé indifférement pour toutes les formes cristallines de la cellulose.

Il est également entendu, au sens de la présente invention, qu'un fluide densifié est composé de molécules, qui seraient à l'état gazeux dans des conditions normales de température et de pression, mais qui là sont comprimées à une pression telle que ledit fluide n'obéit plus à l'équation d'état des gaz parfaits. A une telle pression, les interactions moléculaires deviennent non négligeables. Au sens de la présente invention, un fluide est dit densifié lorsqu'il est soumis à des conditions de températures et de pression qui impliquent que sa masse volumique soit supérieure ou égale à 15% de la masse volumique critique dudit fluide soumis à sa pression critique et sa température critique. Un tel fluide densifié peut ainsi être sous la forme d'un gaz par exemple dense, ou d'un liquide. Les fluides densifiés sont largement utilisés dans le domaine de l'extraction depuis de nombreuses années et sont par exemples décrits dans les articles suivants : « Extraction of Natural Substances with Dense Gases », Egon Stahl and Karl Werner Quirin, Pharmaceutical Research, 1984, Volume 1, Number 5, p 189-194, and « Dense Gases for Extraction and Refining », E. Stahl, K.-W. Quirin, and D. Gerard, Springer-Verlag, Berlin 1986.

Au sens de la présente invention, un fluide est dit inerte lorsqu'il ne réagit pas avec l'agent oxydant utilisé pour l'étape d'oxydation du polysaccharide. Ainsi, un fluide densifié inerte n'est pas oxydé ou dégradé par ledit agent oxydant dans les conditions de mise en oeuvre du procédé selon l'invention. Ou encore, un fluide est inerte s'il permet d'obtenir une solution sensiblement stable dudit agent oxydant dissout dans ledit fluide.

Parmi les polysaccharides oxydés, la cellulose oxydée présente un intérêt majeur et la présente invention est décrite plus particulièrement avec celle-ci. Cependant, dans la présente invention, il est entendu que la cellulose oxydée peut être remplacée par tout polysaccharide oxydé.

Après un tel traitement d'oxydation, la cellulose, en particulier, devient résorbable par le corps humain et présente des propriétés antibactériennes et hémostatiques intéressantes et, de ce fait, est très utilisée pour la fabrication de produits à usages médicaux ou chirurgicaux.

Au sens de la présente invention, le matériau à base de polysaccharide peut se présenter sous une forme quelconque, en particulier et de façon non exhaustive sous la forme d'une poudre, de fibres, de fils, d'un film ou encore sous la forme d'un textile.

L'utilisation de dioxyde d'azote n'est pas sans présenter certains inconvénients. En effet, la réaction d'oxydation de la cellulose par du dioxyde d'azote génère des sous-produits de réactions ou de dégradations qui sont incompatibles voire dangereux avec des usages médicaux ou chirurgicaux. Parmi les sous-produits de réactions ou de dégradations, peuvent être cités en particulier l'acide nitrique et l'acide nitreux. De tels sous-produits peuvent altérer ou dégrader la cellulose oxydée ou encore rendre impossible un contrôle exact du degré d'oxydation de celle-ci.

Diverses procédures ont été expérimentées afin d'éliminer les sous-produits de réactions ou de dégradations. Les premiers procédés d'oxydation de la cellulose faisaient intervenir un lavage aqueux suivi d'un séchage à l'air. Or, l'usage d'eau présente l'énorme inconvénient de dégrader prématurément la cellulose oxydée qui est alors inutilisable comme matériau hémostatique. Par la suite, le lavage à l'eau de la cellulose oxydée a été progressivement remplacé par un lavage à l'aide d'un trempage dans un mélange d'eau et d'alcool ou encore à l'aide d'un trempage dans un bain d'alcool pur suivi d'un séchage à l'air. Cependant cette solution n'est pas satisfaisante car, en plus des coûts élevés des solvants, il est difficile d'éliminer l'alcool sans encore altérer la cellulose oxydée. En effet, le séchage de la cellulose oxydée, ainsi mouillée par un alcool, induit une contraction indésirable de ladite cellulose oxydée. Par ailleurs, l'utilisation d'un alcool pur pour effectuer un lavage d'un matériau à base de polysaccharide oxydé n'est pas simple à mettre en oeuvre à l'échelle industrielle.

Aucun des procédés décrits ne permet donc d'éliminer aisément les sous-produits de réactions ou de dégradations générés lors de l'oxydation d'un matériau à base de polysaccharide, en particulier à base de cellulose, sans induire de dégradation et/ou d'altération dudit matériau.

Il existe donc un besoin d'un procédé de lavage d'un matériau à base de polysaccharide oxydé, plus particulièrement de cellulose oxydée, permettant d'éviter une dégradation et/ou une altération dudit polysaccharide oxydé. Il est souhaitable que le nouveau procédé puisse être mis en oeuvre à une échelle industrielle et qu'il permette l'obtention de matériaux compatibles avec leurs utilisations dans les domaines médicaux ou chirurgicaux. Enfin, pour des considérations médicales et environnementales, l'utilisation de solvants organiques devrait être évitée ou minimisée.

La présente invention a pour but de répondre en tout ou partie aux besoins exposés ci-dessus.

A cet effet, l'objet de la présente invention se rapporte à un procédé de lavage d'un matériau à base de polysaccharide ayant subi une oxydation par au moins un agent oxydant, ledit procédé comportant une première étape de lavage dans laquelle ledit matériau est balayé par un premier fluide densifié inerte vis-à-vis dudit agent oxydant, caractérisé en ce que la première étape est suivie d'une deuxième étape de lavage dans laquelle ledit matériau est balayé par une composition de lavage comprenant au moins un deuxième fluide densifié inerte et au moins un alcool, ledit deuxième fluide densifié inerte étant choisi parmi le dioxyde de carbone, le xénon, l'argon, le krypton, l'éthane, le propane, l'hexafluoro-éthane, le trifluoro-méthane, le chloro-trifluoro-méthane, le chloro-difluoro-méthane, le dichloro-difluoro-méthane et/ou leurs mélanges.

Par balayage il est entendu au sens de la présente invention que le matériau à laver est balayé, percolé ou encore traversé par un courant du fluide ou de la composition de lavage, de préférence de façon continue, ledit courant emportant avec lui les produits que l'on souhaite éliminer du matériau. Un tel balayage selon l'invention, correspondant à une injection de préférence continue du fluide ou de la composition de lavage, permet de laver efficacement le matériau, c'est-à-dire, selon l'étape de lavage envisagée, d'éliminer l'oxydant en excès ou ensuite d'éliminer les sous-produits de réactions ou de dégradations générés lors de l'oxydation du matériau. En particulier, le balayage selon l'invention, c'est-à-dire l'injection d'un courant de fluide ou de composition de lavage qui traverse le matériau, est de préférence maintenu le temps nécessaire à l'évacuation des produits à éliminer. En particulier, selon le procédé de l'invention, le matériau à laver n'est pas trempé dans un récipient statique contenant le fluide ou la composition de lavage. En effet, un tel trempage, de par le caractère éphémère et statique de l'imprégnation qu'il génère, est différent du balayage dynamique du procédé de l'invention et ne permet pas de laver efficacement le matériau, c'est-à-dire d'en éliminer efficacement les produits non désirés.

Ainsi, le procédé de lavage selon l'invention permet d'obtenir un matériau à base de polysaccharide oxydé dépourvu de résidus d'oxydant : en effet, lors de la première étape de lavage du procédé selon l'invention, le balayage du matériau par le premier fluide densifié inerte permet le transport et l'évacuation de l'excès dudit oxydant. Le procédé selon l'invention permet également d'obtenir un matériau à base de polysaccharide oxydé dépourvu desdits sous-produits de réactions et/ou de dégradations : en effet, lors de la deuxième étape de lavage, le balayage du matériau par ladite composition de lavage permet une extraction accrue de ceux-ci. Le procédé selon l'invention permet de façon avantageuse par rapport aux procédés connus de l'art antérieur de diminuer la quantité d'alcool utilisée et d'éviter la contraction dudit matériau : en effet le procédé selon l'invention permet de ne pas recourir à une étape classique de trempage dudit matériau dans un bain d'alcool occasionnant en outre généralement un rétrécissement dudit matériau. Par ailleurs, le procédé selon l'invention peut être mis en oeuvre à l'échelle industrielle de façon simple, en particulier dans des conditions voisines de température et de pression du procédé d'oxydation décrit dans la demande de brevet WO 2006/018552. Le procédé de lavage selon l'invention peut être mis en oeuvre à la suite du procédé d'oxydation décrit dans la demande de brevet WO 2006/018552 ce qui permet, de façon avantageuse, d'éviter audit matériau d'être exposé à l'air ou à l'humidité et donc de subir des dégradations supplémentaires. Enfin, le procédé selon l'invention permet un emballage sous atmosphère inerte dudit matériau directement à la fin du procédé de lavage selon l'invention.

Dans un mode de mise en oeuvre préféré du procédé de lavage selon l'invention, le deuxième fluide densifié inerte est choisi parmi le dioxyde de carbone, le xénon, l'argon, le krypton, l'éthane, le propane et/ou leurs mélanges.

Par exemple, lorsque des gaz rares tels que le xénon, l'argon ou le krypton sont comprimés à une pression de 60 bar (6 MPa), ils sont sous forme de fluides densifiés dans lesquels certains composés volatils, comme le NO₂/N₂O4 ou les alcools de faible masse molaire comme le méthanol, l'éthanol, le propanol ou le butanol, montrent une solubilité significative.

Dans un mode de mise en oeuvre du procédé de lavage selon l'invention, ladite composition de lavage est monophasique. Par monophasique il est entendu au sens de la présente demande que la composition de lavage ne forme qu'une seule phase, ledit alcool étant complétement miscible dans ledit deuxième fluide densifié inerte, dans les conditions de mise en oeuvre du procédé de lavage selon l'invention.

Dans un mode de mise en oeuvre du procédé de lavage selon l'invention, ledit procédé comporte en outre une troisième étape de lavage dans laquelle ledit matériau est balayé par un troisième fluide densifié inerte : ceci permet en particulier d'éliminer ledit alcool déposé sur ledit matériau à base de polysaccharide lors de ladite deuxième étape de lavage. Le procédé selon l'invention permet ainsi d'éviter l'étape habituelle de séchage à l'air des procédés de l'art antérieur pour éliminer ledit alcool, étape qui est généralement responsable d'un rétrécissement et/ou d'une dégradation supplémentaires dudit matériau.

Il est entendu que la quantité de premier fluide densifié inerte utilisée lors de la première étape est suffisante pour évacuer substantiellement les résidus d'oxydation, en particulier l'oxydant. De même, la quantité de deuxième fluide densifié inerte utilisée lors de la deuxième étape est suffisante pour éliminer substantiellement les sous-produits de réactions et/ou de dégradations. Enfin, la quantité de troisième fluide densifié inerte utilisée, le cas échéant, lors d'une éventuelle troisième étape est suffisante pour évacuer substantiellement l'alcool utilisé lors de la deuxième étape du procédé. Les quantités des différents fluides étant directement liées au temps d'injection des flux ou courants de ces fluides pour chaque étape, il est également entendu que, pour chaque étape, le temps d'injection du fluide, de préférence sous la forme d'un flux continu, est suffisant pour évacuer substantiellement le ou les produits à éliminer.

Dans un mode de mise en oeuvre du procédé de lavage selon l'invention, la composition de lavage employée lors de la deuxième étape de lavage comporte entre 5% et 95% en poids, de préférence entre 5% et 40% en poids, dudit alcool par rapport au poids total de la composition de lavage.

Dans un mode de mise en oeuvre du procédé de lavage selon l'invention, au moins l'une des étapes de lavage est réalisée à température sensiblement constante choisie dans l'intervalle compris entre 20°C et 60°C, de préférence entre 30°C et 50°C. Une température sensiblement constante permet d'éviter la formation de zones de condensation. La température du procédé selon l'invention doit de préférence être maintenue au dessus de la température à laquelle ledit matériau a subi l'oxydation par l'agent oxydant et en dessous de 60°C pour éviter la dégradation du matériau à base de polysaccharide oxydé.

Dans un mode de mise en oeuvre du procédé de lavage selon l'invention, au moins une des étapes de lavage est réalisée en flux continu avec un débit sensiblement constant dudit premier et/ou troisième fluide densifié inerte et/ou de ladite composition de lavage. De préférence, pour chaque étape de lavage du procédé selon l'invention, le balayage du matériau est réalisé en flux continu. En effet, un flux continu permet une évacuation efficace des produits à éliminer et donc un lavage optimal du matériau.

Dans un mode de mise en oeuvre du procédé de lavage selon l'invention, au moins l'une des étapes de lavage est conduite à une pression supérieure à 30 bars (3 MPa). La pression du procédé selon l'invention doit de préférence être maintenue au dessus de la pression à laquelle lesdits premier, deuxième et/ou troisième fluides densifiés inertes peuvent exister.

Dans un mode de mise en oeuvre du procédé de lavage selon l'invention, lesdits premier et/ou troisième fluides densifiés inertes sont choisis parmi le diazote, le dioxyde de carbone, les gaz rares ou leurs mélanges. Préférentiellement, lesdits premier et troisième fluides densifiés inertes sont identiques. Avantageusement, lesdits premier et troisième fluides densifiés inertes sont le dioxyde de carbone. Préférentiellement alors, lesdits premier et troisième fluides densifiés inertes sont le dioxyde de carbone supercritique.

Dans un mode de mise en oeuvre du procédé de lavage selon l'invention, ledit premier fluide densifié inerte est utilisé à une pression inférieure à sa pression critique pour mettre en oeuvre la première étape dudit procédé. Dans un mode de mise en oeuvre du procédé de lavage selon l'invention, le cas échéant, ledit troisième fluide densifié inerte est utilisé à une pression inférieure à sa pression critique pour mettre en oeuvre la troisième étape dudit procédé.

Dans un autre mode de mise en oeuvre de l'invention, la deuxième étape de lavage dudit procédé est mise en oeuvre à une pression supérieure ou égale à la pression critique dudit deuxième fluide densifié inerte.

Selon un mode de mise en oeuvre du procédé selon l'invention, le deuxième fluide densifié inerte est le dioxyde de carbone et ladite deuxième étape du procédé de lavage est mise en oeuvre dans des conditions de température et de pression telles que ladite composition de lavage est sous forme supercritique.

Dans un mode de mise en oeuvre du procédé de lavage selon l'invention, au moins une des étapes du procédé de lavage selon l'invention est mise en oeuvre en phase liquide. Les première et/ou deuxième étapes de même que l'éventuelle troisième étape dudit procédé de lavage selon l'invention peuvent être mises en oeuvre, indépendanment l'une de l'autre, dans des conditions de température et de pression qui impliquent que ledit premier, deuxième et/ou troisième fluide densifié inerte respectivement soit en phase liquide.

Une mise en oeuvre efficace du procédé de lavage selon l'invention consiste à soumettre le matériau à base de polysaccharide à un flux des différents fluides densifiés et/ou de la composition de lavage. Ainsi, dans le cas d'un matériau constitué d'un textile, les différents fluides densifiés et/ou la composition de lavage passent avantageusement à travers ledit textile.

Dans un mode de mise en oeuvre du procédé de lavage selon l'invention, ledit alcool employé lors de la deuxième étape de lavage est un alcool choisi parmi les alcools en C1-C4 et/ou leurs mélanges. Préférentiellement alors, ledit alcool employé lors de la deuxième étape de lavage est choisi parmi l'éthanol, l'isopropanol et/ou leurs mélanges. Les alcools en C1-C4 présentent une bonne solubilité dans le fluide densifié inerte utilisé dans le procédé selon l'invention et plus particulièrement dans le dioxyde de carbone liquide ou le dioxyde de carbone supercritique. En particulier, l'éthanol et l'isopropanol sont les alcools qui présentent les meilleures solubilités dans le dioxyde de carbone supercritique. De plus l'éthanol et l'isopropanol ne présentent pas une forte toxicité comme le méthanol ou le butanol. Pour au moins une des deux raisons précédentes, l'éthanol et l'isopropanol sont préférés.

Dans un mode de mise en oeuvre du procédé de lavage selon l'invention, lesdites première, deuxième et éventuellement troisième étapes de lavage sont réalisées sur un matériau à base de cellulose oxydée. De façon préférentielle alors, lesdits premier, deuxième et troisième fluides densifiés inertes sont le dioxyde de carbone, et ladite deuxième étape est mise en oeuvre dans des conditions de température et de pression telles que ladite composition de lavage est sous forme supercritique.
Le procédé selon l'invention permet ainsi de minimiser la dégradation due à l'oxydation et n'apporte en particulier pas de dégradation supplémentaire due habituellement à l'utilisation d'eau lors d'étape de lavage classique. Le matériau obtenu par le procédé selon l'invention est stable et présente des propriétés hémostatiques et antibactériennes intéressantes.

Dans un mode de mise en oeuvre du procédé de lavage selon l'invention, lesdites première, deuxième et éventuellement troisième étapes de lavage sont réalisées sur un matériau à base de polysaccharide, en particulier de la cellulose, ayant subi une oxydation par l'unimère NO₂, le dimère N₂O₄ ou leurs mélanges.

Ainsi, l'invention porte encore sur un procédé de lavage d'un matériau à base de cellulose ayant subi une oxydation par l'unimère NO₂, le dimère N₂O₄ ou leurs mélanges, ledit procédé comportant une première étape de lavage dans laquelle ledit matériau est balayé par un premier fluide densifié inerte qui est du dioxyde de carbone, caractérisé en ce que la première étape est suivie d'une deuxième étape de lavage dans laquelle ledit matériau est balayé par une composition de lavage comprenant au moins un deuxième fluide densifié inerte qui est du dioxyde de carbone et au moins un alcool, ladite composition de lavage étant sous forme supercritique.

Des exemples concrets mais non limitatifs sont donnés afin de mieux comprendre l'invention.

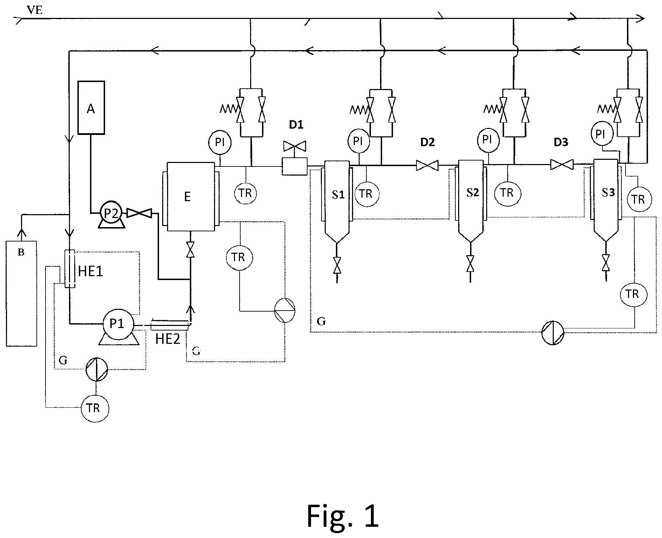

La Figure 1 représente une vue schématique d'une unité de lavage permettant de mettre en oeuvre le procédé selon l'invention.

Le procédé selon l'invention peut être mis en oeuvre à l'aide d'une unité de lavage représentée schématiquement sur la figure 1. Par exemple, du dioxyde de carbone utilisé pour la mise en oeuvre dudit procédé est stocké dans un container B sous forme d'un mélange de liquide et de gaz. Il est refroidi par un échangeur thermique à une température à laquelle il est liquide, autour de 0°C. Le dioxyde de carbone est ensuite pompé par une pompe volumètrique P1 permettant de contrôler le débit du flux, tandis que la pression du dioxyde de carbone délivré au sein de l'unité de lavage est contrôlée par la vanne de régulation D1. Le dioxyde de carbone est ensuite chauffé au moyen d'un échangeur thermique HE2 avant d'être injecté sous forme d'un fluide densifié dans un extracteur E où est placé un matériau à base de polysaccharide oxydé, par exemple de la cellulose oxydée. Lors de la deuxième étape de lavage dudit procédé de lavage selon l'invention, un alcool est délivré au moyen d'un système d'injection comprenant un réservoir d'alcool A et une pompe P2 du type HPLC (Chromatographie Liquide Haute Performance) pour former une composition de lavage. La pression au sein de l'extracteur E est maintenue à la valeur désirée par une vanne de régulation D1. Depuis l'extracteur E, le fluide densifié ou la composition de lavage est dirigé vers des séparateurs S1, S2 et S3. Lesdits séparateurs S1 et S2 sont régulés à l'aide de vannes D2 et D3 respectivement. L'extracteur E et les séparateurs S1 et S2 sont thermostatés par double enveloppe afin de maintenir une température constante. Les produits dissous au sein des fluides densifiés et/ou de la composition de lavage sont récupérés au niveau de sorties équipant les séparateurs. Divers indicateurs de pression PI et régulateurs de température TR sont répartis sur l'unité de lavage.

Durant la première étape de lavage, le dioxyde de carbone utilisé comme premier fluide densifié inerte contient des traces de dioxyde d'azote après être passé dans l'extracteur E. Il est à noter que le dioxyde de carbone pur peut être récupéré après bullage dans de la soude. Le dioxyde de carbone ainsi récupéré peut être comprimé et recyclé dans l'extracteur E.

### Exemple 1: Oxydation d'un matériau en cellulose :

Un textile en cellulose est oxydé à l'aide de dioxyde d'azote (NO₂) dans un réacteur pressurisé de laboratoire suivant la méthode décrite ci-après :

0,5 g d'un textile de cellulose régénérée est placé dans un réacteur cylindrique pressurisé de 135 ml, sur un plateau en Téflon® pour éviter au textile de s'emmêler autour de l'agitateur magnétique placé au fond du réacteur. Le plateau de Téflon® permet également d'éviter le contact entre ledit matériau et le dioxyde d'azote liquide. Le réacteur est purgé avec de l'azote afin d'éliminer l'air puis la température est augmentée jusqu'à 40°C. Ensuite, 1 g de dioxyde d'azote liquide, refroidi à 13°C environ, est injecté dans le réacteur grâce à un dispositif dédié. La température est maintenue constante durant 3 heures, tandis que la pression augmente jusqu'à un maximum de 3,1 bars (0,31 MPa). A la fin de la réaction, le réacteur est rapidement refroidi à la température ambiante. Le NO₂ est fixé par un piège à soude et le réacteur est lavé avec un flux de dioxyde de carbone.

On obtient un textile à base de cellulose oxydée.

### Exemple 2 : Lavage d'un matériau en cellulose oxydée avec du dioxyde de carbone et de l'éthanol.

Le textile en matériau à base de cellulose oxydée obtenu dans l'exemple précédent est placé dans un réacteur pressurisé et l'air est soigneusement purgé par un flux de CO₂. La pression est élevée à 100 bars (10 MPa) et la température ajustée à 40°C durant tout le déroulement du procédé de lavage. Du CO₂ est pompé puis comprimé et injecté sous forme supercritique dans le réacteur avec un débit constant de 20 g/min, le flux étant dirigé du bas vers le haut dudit réacteur. Ledit textile est ainsi soumis à une première étape de lavage avec du CO₂ supercritique pendant 30 min durant laquelle le matériau est balayé par le CO₂ supercritique. Lors de cette première étape de lavage, l'oxydant en excès, à savoir le NO₂ en excès, est éliminé. Les sous-produits de réactions et/ou de dégradations tels que l'acide nitreux et l'acide nitrique sont ensuite éliminés lors d'une deuxième étape de lavage par une composition de lavage monophasique supercritique de dioxyde de carbone et d'éthanol (pur à 96%) dont les proportions sont de 15% en poids d'éthanol (pur à 96%) et 85% en poids de CO₂ par rapport au poids total de la composition de lavage. L'injection d'éthanol est réalisée grâce à des pompes précises telles que celles habituellement utilisées pour les chromatographies liquides à hautes performances (HPLC). Lors de cette étape, le textile en cellulose oxydée est balayé par la composition de lavage avec un débit de 20 g/min pendant 1 heure. Au cours de ce balayage, l'éthanol réagit avec les sous-produits réactionnels, à savoir l'acide nitrique et l'acide nitreux. Le liquide extrait est collecté dans des séparateurs. Enfin, une troisième étape de lavage est effectuée en injectant du CO₂ supercritique dans le réacteur pendant 30 min sous la forme d'un flux qui balaye le textile en cellulose oxydée, de la même façon que pour la première étape de lavage avec un débit de 20 g/min. Cette troisième étape de lavage permet d'éliminer les résidus d'éthanol utilisé lors de la deuxième étape de lavage et de sécher le textile. Le textile en matériau à base de cellulose oxydée est enfin ramené à température ambiante et à pression atmosphérique. Lors de la mise en oeuvre de ce procédé, chaque étape est réalisée en flux continu avec un débit sensiblement constant du fluide densifié inerte ou de la composition de lavage.

Le procédé ainsi décrit permet d'obtenir 200 mg d'un textile en cellulose oxydée lavé et séché. Afin de déterminer le degré d'oxydation de la cellulose, le textile obtenu est dissout dans 2 mL d'hydroxyde de sodium à 0,5 N et puis dilué avec 8 ml d'eau distillée. La solution est ensuite titrée avec une solution d'acide standardisée à 0,05 N de HCl jusqu'au virage de la phénolphtaléine. Un même titrage témoin est réalisé dans les mêmes conditions sur la solution d'hydroxyde de sodium seule. Le contenu en acide carboxylique du textile, calculé par différence, donne une valeur de 18,4%.

Après un tel procédé de lavage selon l'invention, le textile conserve un aspect blanc et reste souple indiquant que le matériau n'a pas été dégradé. Il a été en effet observé que la dégradation de la cellulose donne habituellement une coloration jaune au textile. La densité de surface de l'échantillon de textile est ensuite mesurée afin de déterminer l'influence du procédé de lavage sur la contraction du textile. Le textile n'a pas subi une contraction significative.

Enfin, la conductivité d'un échantillon dudit textile lavé selon le présent exemple est mesurée dans l'eau. Etant donné la difficulté de détecter la présence d'une faible quantité d'acide nitreux ou d'acide nitrique par des méthodes de spectrométries traditionnelles, une telle mesure de la conductivité permet de révéler la présence de résidus d'acides forts sur ledit textile. Il a été constaté que la conductivité augmente en effet avec la quantité d'acide nitrique résiduelle contenue dans un textile. Un procédé de lavage efficace pour éliminer le dioxyde d'azote et ses produits dérivés résiduels doit donc permettre d'obtenir une conductivité la plus faible possible. Ainsi, 100 mg de textile lavé selon le présent exemple sont disposé dans 1 mL d'eau distillée. Après 1 h, une faible valeur de 50 µS.cm⁻¹ est mesurée. Une telle conductivité indique que le procédé de lavage selon le présent exemple est efficace.

### Exemple 3 : Lavage d'un matériau en cellulose oxydée avec du dioxyde de carbone et de l'isopropanol.

Le textile en matériau à base de cellulose oxydée obtenu à l'exemple 1, est placé dans un réacteur pressurisé et l'air est soigneusement purgé par un flux de CO₂. La pression est élevée à 100 bars (10 MPa) et la température ajustée à 40°C durant tout le déroulement du procédé de lavage. Du CO₂ est pompé puis comprimé et injecté sous forme supercritique dans le réacteur avec un débit constant de 20 g/min et le flux étant dirigé du bas vers le haut du réacteur. Ledit textile est ainsi soumis à une première étape de lavage avec du CO₂ supercritique pendant 30 min durant laquelle le textile est balayé par ledit CO₂ supercritique pour éliminer le NO₂ en excès comme vu à l'exemple précédent. Les sous-produits de réactions et/ou de dégradations tels que l'acide nitreux et l'acide nitrique sont ensuite éliminés lors d'une deuxième étape de lavage par une composition de lavage supercritique de dioxyde de carbone et d'isopropanol (pur à 99%) dont les proportions sont de 15% en poids d'isopropanol (pur à 99%) et 85% en poids de CO₂ par rapport au poids total de la composition de lavage. L'injection d'isopropanol est réalisée grâce à des pompes précises telles que celles habituellement utilisées pour les chromatographies liquides à hautes performances (HPLC). Lors de cette étape, le textile en cellulose oxydée est balayé par la composition de lavage avec un débit 20g/min pendant 1h. Au cours de ce balayage, l'isopropanol réagit avec les sous-produits réactionnels, à savoir l'acide nitrique et l'acide nitreux. Le liquide extrait est collecté dans des séparateurs. Enfin, pour éliminer les résidus d'isopropanol utilisé lors de la deuxième étape de lavage et sécher le textile, une troisième étape de lavage est effectuée en injectant du CO₂ supercritique dans le réacteur pendant 30 min sous la forme d'un flux qui balaye le textile en cellulose oxydée, de la même façon que pour la première étape de lavage avec un débit de 20 g/min. Le textile en matériau à base de cellulose oxydée est enfin ramené à température ambiante et à pression atmosphérique.

Le procédé ainsi décrit permet d'obtenir 200 mg d'un textile lavé et séché. De même que pour le textile de l'exemple 2, ce dernier est dissout dans 2 mL d'hydroxyde de sodium à 0,5 N et puis dilué avec 8 ml d'eau distillée. La solution est ensuite titrée avec une solution d'acide standardisée à 0,05 N de HCl jusqu'au virage de la phénolphtaléine. Un même titrage témoin est réalisé dans les mêmes conditions sur la solution d'hydroxyde de sodium seule. Le contenu en acide carboxylique du textile, calculé par différence, donne une valeur de 20%.

Après un tel procédé de lavage selon l'invention, le textile conserve un aspect blanc et reste souple indiquant que le matériau n'a pas été dégradé. La densité de surface de l'échantillon de textile est ensuite mesurée afin de déterminer l'influence du procédé de lavage sur la contraction du textile. Le textile n'a pas subi une contraction significative.

Enfin, la conductivité d'un échantillon du textile lavé selon le présent exemple est mesurée dans l'eau. Etant donné la difficulté de détecter la présence d'une faible quantité d'acide nitreux ou d'acide nitrique par des méthodes de spectrométries traditionnelles, une telle mesure de la conductivité permet de révéler la présence de résidus d'acides forts sur ledit textile. Ainsi, 100 mg de textile lavé selon le présent exemple sont disposé dans 1 mL d'eau distillée. Après 1 h, une faible valeur de 167 µS.cm⁻¹ est mesurée. Une telle conductivité signifie que le procédé de lavage selon le présent exemple est efficace.

### Exemple 4 : Lavage in situ d'un textile en cellulose oxydée avec du dioxyde de carbone et de l'éthanol à la suite d'une oxydation dans des conditions semi-industrielles.

### Oxydation du textile :

Un textile en cellulose est oxydé dans une unité pilote suivant la méthode décrite ci-après : 200 g d'un textile de cellulose régénérée sont placés dans un réacteur cylindrique de 4 L, enroulé autour d'un axe en acier inoxydable percé d'une multitude de trous. La forme de l'installation est telle que le réacteur est connecté à une boucle de circulation, comprenant un échangeur de chaleur ainsi qu'une pompe centrifuge, destinée à faire circuler un fluide à température contrôlée à travers le textile.

L'axe en acier inoxydable est inséré dans le réacteur préchauffé à une température de 40°C au moyen d'une double enveloppe. Le réacteur est scellé puis purgé avec de l'azote afin d'évacuer l'air. Du dioxyde de carbone (CO₂) est alors injecté jusqu'à atteindre une pression de 50 bar. Ensuite, 210 g de dioxyde d'azote liquide (NO₂), refroidi à 13°C environ, sont injectés dans le réacteur grâce à un dispositif dédié. La température est maintenue constante (i.e. 40°C) durant 2h15, tandis que le textile est continuellement traversé par le mélange pressurisé CO₂/NO₂ entraîné par la pompe de circulation.

On obtient un textile à base de cellulose oxydée.

### Lavage avec du dioxyde de carbone et de l'éthanol :

Une fois l'étape d'oxydation terminée, la pression est élevée à 200 bar (20 MPa) par une injection de CO₂. La température reste ajustée à 40°C durant tout le déroulement du procédé de lavage. Une valve de régulation de pression située sur la boucle de régulation est alors réglée pour s'ouvrir à 200 bar tandis que du CO₂ est injecté sous forme supercritique dans le réacteur avec un débit constant de 15 kg/h, le flux traversant ledit réacteur. Ledit textile est ainsi soumis à une première étape de lavage pendant 60 min durant laquelle le matériau est balayé par un flux continu d'un premier fluide densifié inerte constitué de CO₂ supercritique. L'injection continue de CO₂ est achevée au moyen d'une pompe à membrane à débit modulable par réglage d'un vernier agissant sur la course du piston. En sortie, le mélange CO₂/NO₂ passe alors à travers une enceinte remplie d'une solution aqueuse de soude (1 mol/L) afin de piéger le NO₂.

Les sous-produits de réactions et/ou de dégradations tels que l'acide nitreux et l'acide nitrique sont ensuite éliminés lors d'une deuxième étape de lavage en injectant de manière continue et pendant 120 min une composition de lavage monophasique supercritique d'éthanol et d'un deuxième fluide densifié inerte constitué de CO₂ dans des conditions semblables de pression (i.e. 200 bar). Les débits respectifs de CO₂ et d'éthanol sont alors de 15 kg/h et 5 L/h. L'injection continue d'éthanol est notamment réalisée grâce à une pompe à membrane à débit modulable par variation de la fréquence du moteur. Le liquide extrait est collecté via des séparateurs, dans un container dédié.

Enfin une troisième étape de lavage est effectuée en injectant un troisième fluide densifié inerte constitué de CO₂ supercritique dans le réacteur pendant 60 min sous la forme d'un flux qui balaye le textile en cellulose oxydée, de la même façon que pour la première étape de lavage, avec un débit de 25 kg/h. Le textile en matériau à base de cellulose oxydée est enfin ramené à température ambiante et à pression atmosphérique en dépressurisant lentement l'unité pilote. Lors de la mise en oeuvre de ce procédé, chaque étape est ainsi réalisée en flux continu avec un débit sensiblement constant des fluides densifiés inertes ou de la composition de lavage.

Le procédé ainsi décrit permet d'obtenir 200 g d'un textile de cellulose oxydée, lavée et séchée. Afin de déterminer le degré d'oxydation de la cellulose, ledit textile est découpé pour analyse. Différents échantillons de 200 mg sont dissous dans 2 mL d'hydroxyde de sodium à 0,5 N, puis dilués avec 8 ml d'eau distillée. Les solutions ainsi obtenues sont alors titrées avec une solution d'acide standardisée à 0,05 N de HCl jusqu'au virage de la phénolphtaléine. Un même titrage témoin est réalisé dans les mêmes conditions sur la solution d'hydroxyde de sodium seule. Le contenu en acide carboxylique des différents morceaux de textile, calculé par différence, donne une valeur moyenne de 13,5%. Après un tel procédé de lavage selon l'invention, le textile conserve un aspect blanc et reste souple indiquant que le matériau n'a pas été dégradé. La densité de surface moyenne de l'échantillon de textile est ensuite mesurée afin de déterminer l'influence du procédé de lavage sur la contraction du textile. Le textile n'a pas subi une contraction significative.

Enfin, la conductivité d'un échantillon dudit textile lavé selon le présent exemple est mesurée dans l'eau. Ainsi, 100 mg de textile lavé sont disposé dans 1 mL d'eau distillée. Après 1 h, une faible valeur de 81 µS.cm⁻¹ est mesurée. Une telle conductivité indique que le procédé de lavage est efficace.

Ainsi, le procédé de lavage selon l'invention permet d'obtenir un lavage efficace, en éliminant les sous-produits de réactions et/ou de dégradations. Le procédé selon l'invention peut être mis en oeuvre dans les mêmes conditions que l'oxydation en milieu supercritique, ce qui simplifie sa mise en oeuvre industrielle. Le procédé selon l'invention permet en outre de minimiser l'utilisation d'alcool et d'éviter l'usage d'autre solvants organiques polluants. Enfin, l'étape classique de trempage dans un bain d'alcool n'étant plus nécessaire, ledit procédé permet d'éviter un rétrécissement du textile.

## Revendications

1. Procédé de lavage d'un matériau à base de polysaccharide ayant subi une oxydation par au moins un agent oxydant, ledit procédé comportant une première étape de lavage dans laquelle ledit matériau est balayé par un premier fluide densifié inerte vis-à-vis dudit agent oxydant, **caractérisé en ce que** la première étape est suivie d'une deuxième étape de lavage dans laquelle ledit matériau est balayé par une composition de lavage comprenant au moins un deuxième fluide densifié inerte et au moins un alcool, ledit deuxième fluide densifié inerte étant choisi parmi le dioxyde de carbone, le xénon, l'argon, le krypton, l'éthane, le propane, l'hexafluoro-éthane, le trifluoro-méthane, le chloro-trifluoro-méthane, le chloro-difluoro-méthane, le dichloro-difluoro-méthane et/ou leurs mélanges.

2. Procédé selon la revendication 1, **caractérisé en ce que** le deuxième fluide densifié inerte est choisi parmi le dioxyde de carbone, le xénon, l'argon, le krypton, l'éthane, le propane et/ou leurs mélanges.

3. Procédé selon la revendication 1 ou 2, **caractérisé en ce qu'**il comporte en outre une troisième étape de lavage dans laquelle ledit matériau est balayé par un troisième fluide densifié inerte.

4. Procédé selon l'une quelconque des revendications précédentes, **caractérisé en ce que** la composition de lavage employée lors de la deuxième étape de lavage comporte entre 5% et 95% en poids, de préférence entre 5% et 40% en poids dudit alcool par rapport au poids total de la composition de lavage.

5. Procédé selon l'une quelconque des revendications précédentes, **caractérisé en ce qu'**au moins l'une des étapes de lavage est réalisée à température sensiblement constante choisie dans l'intervalle compris entre 20°C et 60°C, de préférence entre 30°C et 50°C.

6. Procédé selon l'une quelconque des revendications 2 à 5, **caractérisé en ce qu'**au moins une des étapes de lavage est réalisée en flux continu avec un débit sensiblement constant dudit premier et/ou troisième fluide densifié inerte et/ou de ladite composition de lavage.

7. Procédé selon l'une quelconque des revendications précédentes, **caractérisé en ce qu'**au moins l'une des étapes de lavage est conduite à une pression supérieure à 3 MPa (30 bars).

8. Procédé selon l'une quelconque des revendications précédentes, **caractérisé en ce que** ledit alcool employé lors de la deuxième étape de lavage est un alcool choisi parmi les alcools en C1-C4 et/ou leurs mélanges.

9. Procédé selon la revendication précédente, **caractérisé en ce que** ledit alcool employé lors de la deuxième étape de lavage est choisi parmi l'éthanol, l'isopropanol et/ou leurs mélanges.

10. Procédé selon l'une quelconque des revendications précédentes, **caractérisé en ce que** ledit deuxième fluide densifié inerte est le dioxyde de carbone et **en ce que** ladite deuxième étape du procédé de lavage est mise en oeuvre dans des conditions de température et de pression telles que ladite composition de lavage est sous forme supercritique.

11. Procédé selon l'une quelconque des revendications 2 à 10, **caractérisé en ce que** lesdits premier et/ou troisième fluides densifiés inertes sont choisis parmi le diazote, le dioxyde de carbone, les gaz rares ou leurs mélanges.

12. Procédé selon la revendication précédente, **caractérisé en ce que** lesdits premier et troisième fluides densifiés inertes sont identiques.

13. Procédé selon la revendication précédente, **caractérisé en ce que** lesdits premier et troisième fluides densifiés inertes sont le dioxyde de carbone.

14. Procédé selon la revendication précédente, **caractérisé en ce que** lesdits premier et troisième fluides densifiés inertes sont le dioxyde de carbone supercritique.

15. Procédé de lavage selon l'une quelconque des revendications précédentes, **caractérisé en ce que** lesdites première, deuxième et éventuellement troisième étapes de lavage sont réalisées sur un matériau à base de cellulose oxydée.

16. Procédé selon la revendication précédente et la revendication 2, **caractérisé en ce que** lesdits premier, deuxième et troisième fluides densifiés inertes sont le dioxyde de carbone, et **en ce que** ladite deuxième étape est mise en oeuvre dans des conditions de température et de pression telles que ladite composition de lavage est sous forme supercritique.

17. Procédé selon l'une quelconque des revendications précédentes, **caractérisé en ce que** lesdites première, deuxième et éventuellement troisième étapes de lavage sont réalisées sur un matériau à base de polysaccharide, en particulier de la cellulose, ayant subi une oxydation par l'unimère NO₂, le dimère N₂O₄ ou leurs mélanges.

## Patentansprüche

1. Verfahren zum Waschen eines Materials auf der Grundlage von Polysaccharid, das einer Oxidation durch mindestens ein Oxidationsmittel unterzogen wurde, wobei das Verfahren einen ersten Schritt des Waschens umfasst, bei dem das Material durch ein erstes verdichtetes Fluid gespült wird, das inert gegenüber dem Oxidationsmittel ist, **dadurch gekennzeichnet, dass** dem ersten Schritt ein zweiter Schritt des Waschens folgt, in dem das Material durch eine Waschzusammensetzung gespült wird, umfassend mindestens ein zweites inertes verdichtetes Fluid, und mindestens einen Alkohol, wobei das zweite inerte verdichtete Fluid ausgewählt ist aus Kohlenstoffdioxid, Xenon, Argon, Krypton, Ethan, Propan, Hexafluorethan, Trifluoromethan, Chlortrifluormethan, Chlordifluormethan, Dichlordifluormethan und/oder ihren Mischungen.

2. Verfahren nach Anspruch 1, **dadurch gekennzeichnet, dass** das zweite inerte verdichtete Fluid ausgewählt ist aus Kohlenstoffdioxid, Xenon, Argon, Krypton, Ethan, Propan und/oder ihren Mischungen.

3. Verfahren nach Anspruch 1 oder 2, **dadurch gekennzeichnet, dass** es außerdem einen dritten Schritt des Waschens umfasst, bei dem das Material durch ein drittes inertes verdichtetes Fluid gespült wird.

4. Verfahren nach einem der vorhergehenden Ansprüche, **dadurch gekennzeichnet, dass** die Waschzusammensetzung, verwendet beim zweiten Schritt des Waschens, zwischen 5 Gew% und 95 Gew%, vorzugsweise zwischen 5 Gew% und 40 Gew%, des Alkohols mit Bezug auf das Gesamtgewicht der Waschzusammensetzung umfasst.

5. Verfahren nach einem der vorhergehenden Ansprüche, **dadurch gekennzeichnet, dass** mindestens einer der Schritte des Waschens bei einer im Wesentlichen konstanten Temperatur durchgeführt wird, ausgewählt aus dem Intervall, das zwischen 20 °C und 60 °C, vorzugsweise zwischen 30 °C und 50 °C, liegt.

6. Verfahren nach einem der Ansprüche 2 bis 5, **dadurch gekennzeichnet, dass** mindestens einer der Schritte des Waschens in Flusskontinuität mit einem im Wesentlichen konstanten Durchsatz des ersten und/oder dritten inerten verdichteten Fluids und/oder der Waschzusammensetzung durchgeführt wird.

7. Verfahren nach einem der vorhergehenden Ansprüche, **dadurch gekennzeichnet, dass** mindestens einer der Schritte des Waschens bei einem Druck von mehr als 3 MPa (30 bar) erfolgt.

8. Verfahren nach einem der vorhergehenden Ansprüche, **dadurch gekennzeichnet, dass** der Alkohol, verwendet beim zweiten Schritt des Waschens, ein Alkohol ist, ausgewählt aus den C1-C4-Alkoholen und/oder ihren Mischungen.

9. Verfahren nach dem vorhergehenden Anspruch, **dadurch gekennzeichnet, dass** der Alkohol, verwendet beim zweiten Schritt des Waschens, ausgewählt ist aus Ethanol, Isopropanol und/oder ihren Mischungen.

10. Verfahren nach einem der vorhergehenden Ansprüche, **dadurch gekennzeichnet, dass** das zweite inerte verdichtete Fluid Kohlenstoffdioxid ist, und dadurch, dass der zweite Schritt des Waschverfahrens unter derartigen Temperatur- und Druckbedingungen ausgeführt wird, dass die Waschzusammensetzung eine superkritische Form aufweist.

11. Verfahren nach einem der Ansprüche 2 bis 10, **dadurch gekennzeichnet, dass** das erste und/oder dritte inerte verdichtete Fluid ausgewählt ist aus Distickstoff, Kohlenstoffdioxid, Edelgasen oder ihren Mischungen.

12. Verfahren nach dem vorhergehenden Anspruch, **dadurch gekennzeichnet, dass** das erste und dritte inerte verdichtete Fluid identisch sind.

13. Verfahren nach dem vorhergehenden Anspruch, **dadurch gekennzeichnet, dass** das erste und dritte inerte verdichtete Fluid Kohlenstoffdioxid sind.

14. Verfahren nach dem vorhergehenden Anspruch, **dadurch gekennzeichnet, dass** das erste und dritte inerte verdichtete Fluid superkritisches Kohlenstoffdioxid sind.

15. Verfahren nach einem der vorhergehenden Ansprüche, **dadurch gekennzeichnet, dass** der erste, zweite und eventuell dritte Schritt des Waschens auf einem Material auf der Grundlage von oxydierter Zellulose durchgeführt werden.

16. Verfahren nach dem vorhergehenden Anspruch und Anspruch 2, **dadurch gekennzeichnet, dass** das erste, zweite und dritte inerte verdichtete Fluid Kohlenstoffdioxid sind, und dadurch, dass der zweite Schritt unter derartigen Temperatur- und Druckbedingungen ausgeführt wird, dass die Waschzusammensetzung eine superkritische Form aufweist.

17. Verfahren nach einem der vorhergehenden Ansprüche, **dadurch gekennzeichnet, dass** der erste, zweite und eventuell dritte Schritt des Waschens auf einem Material auf der Grundlage von Polysaccharid, insbesondere Zellulose durchgeführt werden, das einer Oxidation durch das Unimer NO₂, das Dimer N₂O₄ oder ihren Mischungen unterzogen wurde.

## Claims

1. Process for washing a polysaccharide-based material which has been subjected to oxidation by at least one oxidizing agent, the said process comprising a first washing stage in which the said material is flushed with a first densified fluid which is inert with regard to the said oxidizing agent, **characterized in that** the first stage is followed by a second washing stage in which the said material is flushed with a washing composition comprising at least one second inert densified fluid and at least one alcohol, the said second inert densified fluid being chosen from carbon dioxide, xenon, argon, krypton, ethane, propane, hexafluoroethane, trifluoromethane, chlorotrifluoromethane, chlorodifluoromethane, dichlorodifluoromethane and/or their mixtures.

2. Process according to Claim 1, **characterized in that** the second inert densified fluid is chosen from carbon dioxide, xenon, argon, krypton, ethane, propane and/or their mixtures.

3. Process according to Claim 1 or 2, **characterized in that** it additionally comprises a third washing stage in which the said material is flushed with a third inert densified fluid.

4. Process according to any one of the preceding claims, **characterized in that** the washing composition employed during the second washing stage comprises between 5 and 95% by weight, preferably between 5 and 40% by weight, of the said alcohol, with respect to the total weight of the washing composition.

5. Process according to any one of the preceding claims, **characterized in that** at least one of the washing stages is carried out at a substantially constant temperature chosen within the range between 20°C and 60°C, preferably between 30°C and 50°C.

6. Process according to any one of Claims 2 to 5, **characterized in that** at least one of the washing stages is carried out in a continuous flow with a substantially constant flow rate of the said first and/or third inert densified fluid and/or of the said washing composition.

7. Process according to any one of the preceding claims, **characterized in that** at least one of the washing stages is carried out at a pressure of greater than 3 MPa (30 bar).

8. Process according to any one of the preceding claims, **characterized in that** the said alcohol employed during the second washing stage is an alcohol chosen from C1-C4 alcohols and/or their mixtures.

9. Process according to the preceding claim, **characterized in that** the said alcohol employed during the second washing stage is chosen from ethanol, isopropanol and/or their mixtures.

10. Process according to any one of the preceding claims, **characterized in that** the said second inert densified fluid is carbon dioxide and **in that** the said second stage of the washing process is carried out under temperature and pressure conditions such that the said washing composition is in the supercritical form.

11. Process according to any one of claims 2 to 10, **characterized in that** the said first and/or third inert densified fluids are chosen from nitrogen, carbon dioxide, rare gases or their mixtures.

12. Process according to the preceding claim, **characterized in that** the said first and third inert densified fluids are identical.

13. Process according to the preceding claim, **characterized in that** the said first and third inert densified fluids are carbon dioxide.

14. Process according to the preceding claim, **characterized in that** the said first and third inert densified fluids are supercritical carbon dioxide.

15. Washing process according to any one of the preceding claims, **characterized in that** the said first, second and optionally third washing stages are carried out on a material based on oxidized cellulose.

16. Process according to the preceding claim and Claim 2, **characterized in that** the said first, second and third inert densified fluids are carbon dioxide and **in that** the said second stage is carried out under temperature and pressure conditions such that the said washing composition is in the supercritical form.

17. Process according to any one of the preceding claims, **characterized in that** the said first, second and optionally third washing stages are carried out on a polysaccharide-based material, in particular cellulose, which has been subjected to oxidation by the unimer NO₂, the dimer N₂O₄ or their mixtures.
